**Europäisches Patentamt**

**European Patent Office**

**Office européen des brevets**

(19)

(11) Numéro de publication : **0 490 783 A2**

# (12) DEMANDE DE BREVET EUROPEEN

(21) Numéro de dépôt : **91420412.8**

(22) Date de dépôt : **21.11.91**

(51) Int. Cl.$^5$ : **G01T 3/00**

(30) Priorité : **07.12.90 FR 90154462**

(43) Date de publication de la demande :
**17.06.92 Bulletin 92/25**

(84) Etats contractants désignés :
**BE CH DE ES GB IT LI NL SE**

(71) Demandeur : **MERLIN GERIN**
**2, chemin des Sources**
**F-38240 Meylan (FR)**

(72) Inventeur : **Burel, Jean-Pierre**
**Merlin Gerin, Sce. Brevets**
**F-38050 Grenoble Cédex (FR)**

(74) Mandataire : **Kern, Paul et al**
**Merlin Gerin Sce. Brevets 20, rue Henri Tarze**
**F-38050 Grenoble Cédex (FR)**

(54) **Dispositif de détection neutronique à dynamique étendue pour le contrôle et la commande des réacteurs nucléaires.**

(57) Un dispositif de détection neutronique (10) est logé dans une enveloppe (12) métallique renfermant un premier détecteur (14) avec une chambre à fission de grande sensibilité, et un deuxième détecteur (16) ayant une chambre à fission (90) de faible sensibilité et une chambre d'ionisation (90) à dépôt de bore compensée au rayonnement gamma.

Application : Mesure à dynamique étendue du débit de fluence neutronique à l'extérieur du coeur d'un réacteur nucléaire.

Fig 1

EP 0 490 783 A2

L'invention concerne un assemblage de détection destiné à mesurer le débit de fluence neutronique à l'extérieur du coeur d'un réacteur nucléaire.

La plage de mesure est très étendue et la détection des neutrons est assurée dans les conditions normales et dans des conditions exceptionnelles caractérisées par un débit de dose gamma très important.

Selon l'art antérieur, il a été nécessaire d'utiliser plusieurs détecteurs pour couvrir toute la plage de mesure des niveaux de débit de fluence d'un réacteur à eau légère.

Pour les faibles niveaux, ce sont des compteurs proportionnels délivrant des impulsions dont le comptage permet de connaître le débit de fluence neutronique.

Pour les forts niveaux, on utilise des chambres d'ionisation délivrant un courant dont la valeur mesurée est proportionnelle au débit de fluence recherché.

Deux types de chambres d'ionisation sont utilisés :

– une chambre d'ionisation non compensée pour faire une mesure précise à haut niveau,

– une chambre d'ionisation compensée au rayonnement gamma pour assurer la continuité de la détection entre le bas niveau et le haut niveau.

La chambre à fission est une chambre d'ionisation remplie de gaz qui permet de détecter principalement les neutrons thermiques par réaction sur un dépôt de matière fissile, généralement formé d'uranium 235.

Les fragments de fission libérés par la réaction avec les neutrons thermiques ionisent le gaz de remplissage et il en résulte des impulsions dont le comptage permet de connaître le débit de fluence neutronique. Comme tous les détecteurs utilisant les phénomènes d'ionisation dans les gaz, une chambre à fission est sensible aux radiations gammas, dont on veut éliminer la contribution.

L'amplitude des impulsions délivrées par la chambre suite aux réactions des neutrons avec l'uranium 235 est très supérieure à l'amplitude des impulsions induites par les réactions des rayons gammas avec les matériaux du détecteur. Grâce à une technique classique de discrimination d'amplitude, on peut compter exclusivement les impulsions provoquées par les neutrons, et éliminer totalement les impulsions provoquées par les rayons gammas.

Etant donné que l'amplitude des impulsions neutrons est largement supérieure à celle des impulsions gamma, la chambre à fission permet de détecter les neutrons dans des débits de dose gamma très importants correspondant aux conditions exceptionnelles envisagées.

La gamme d'utilisation des chambres à fission est de façon caractéristique définie par les limites des taux de comptage qui sont reliés étroitement à la largeur des impulsions. Le taux de comptage maximum est limité à $10^6$ coups par seconde. Le taux de comptage minimum est imposé par les limites statistiques et correspond à un coup par seconde.

Une particularité des chambres à fission réside dans la grande variété des sensibilités accessibles par l'ajustement de la quantité de matériau fissile introduite dans le détecteur.

Les sensibilités des chambres à fission sont généralement comprises entre 4 coups par seconde par unité de flux et $10^{-3}$ coups par seconde par unité de flux. L'unité de flux (nv) est égale à un neutron par centimètre carré et par seconde.

La chambre d'ionisation compensée à dépôt de bore est une chambre différentielle constituée de trois électrodes qui définissent deux chambres élémentaires. La première chambre élémentaire est située entre l'électrode de polarisation haute tension positive et l'électrode signal qui recueille les charges développées par ionisation dans le gaz. Les surfaces des électrodes de cette chambre élémentaire sont recouvertes d'un dépôt de bore. Cette chambre élémentaire est donc sensible aux neutrons et aux gammas.

La deuxième chambre élémentaire est située entre l'électrode signal et l'électrode de compensation qui reçoit une tension de polarisation négative. Cette chambre élémentaire n'ayant pas de dépôt de bore n'est sensible qu'aux gammas. Les courants d'ionisation recueillis sur l'électrode signal se retranchent grâce à leurs polarisations opposées. Le courant résultant est principalement l'image du débit de fluence neutronique recherché.

La limite supérieure de détection en débit de fluence neutronique est imposée par les caractéristiques de saturation. Celles-ci dépendent de la quantité surfacique de matériau sensible, de la tension appliquée et du gaz de remplissage.

L'ajustage de ces paramètres permet de déterminer la limite supérieure de détection, laquelle peut atteindre $10^{11}$ Unités de flux. La limite inférieure de détection est imposée par le rapport de compensation, le débit de fluence neutronique et le débit de dose gamma.

Dans les conditions normales, auprès d'un réacteur à eau pressurisée, le débit de dose gamma susceptible de perturber la mesure est de l'ordre de 10 Gy/h. Le débit de fluence neutronique minimum mesurable est de l'ordre de $10^4$ NV unités.

Dans des conditions exceptionnelles, on admet que le débit de dose gamma peut atteindre $10^4$ Gy/h et le rapport de compensation peut être modifié. Le domaine d'utilisation est donc réduit. La limite inférieure de détection est typiquement de l'ordre de $10^8$ NV.

L'utilisation de plusieurs types de chambres ou compteurs à boîtiers indépendants pour couvrir toute la plage de mesure des débits de fluence d'un réacteur nucléaire à eau légère pose un problème d'encombrement et nécessite une multitude de câbles de connexion.

Il est souhaitable de pouvoir utiliser un ensemble de détection pour:

– limiter le nombre de câbles
– fonctionner en conditions exceptionnelles
– élargir la dynamique de mesure

L'objet de l'invention consiste à réaliser un dispositif de détection des neutrons fonctionnant dans une plage étendue, susceptible de travailler dans une plage de débit de fluence neutronique allant de 0,1 à $10^{11}$ neutrons par centimètre carré et par seconde (nv), et en présence d'un débit de dose gamma pouvant atteindre $10^5$ Gy/h.

Suivant un mode de réalisation préférentiel, le dispositif rassemble dans un même boîtier, à encombrement réduit, un premier détecteur avec une chambre à fission de grande sensibilité, et un deuxième détecteur, avec une chambre à fission de faible sensibilité et une chambre d'ionisation à dépôt de bore compensée au rayonnement gamma, ainsi que des moyens pour limiter le nombre de câbles et pour limiter la puissance nécessaire pour polariser les détecteurs.

Le deuxième détecteur est placé dans l'enveloppe, et comprend une chambre différentielle d'ionisation compensée au rayonnement gamma, ayant deux électrodes de polarisation et une électrode de mesure, délimitant une première et une deuxième chambres élémentaires adjacentes de polarités positive et négative, les électrodes de la partie positive de la première chambre élémentaire étant dotées d'un premier dépôt de bore, tandis qu'au moins une des électrodes de la partie négative de la deuxième chambre élémentaire comporte un deuxième dépôt d'uranium de manière à former une chambre à fission ayant une sensibilité inférieure à celle du premier détecteur, et que l'électrode de mesure est raccordée à un deuxième câble utilisé pour transmettre un signal de sortie impulsionnel issu de la deuxième chambre élémentaire, et/ou un signal de sortie en courant issu de la première chambre élémentaire.

L'électrode de polarisation positive du deuxième détecteur est raccordée à la source de tension positive par le premier câble telle que la première chambre élémentaire à dépôt de bore du deuxième détecteur et la chambre à fission de forte sensibilité du premier détecteur, utilisent la même alimentation de polarisation positive. L'autre électrode de polarisation négative est reliée à une source de tension négative par un troisième câble. Cette polarisation simultanée des deux détecteurs placés dans la même enveloppe permet de limiter le nombre de câbles de liaison entre le point de mesure et le circuit électronique.

La chambre d'ionisation du premier détecteur comporte une succession de paires d'électrodes positives imbriquées entre des paires d'électrodes négatives, chaque électrode positive ou négative étant conformée en disque métallique revêtu sur l'une des faces d'un dépôt d'uranium. Un élément modérateur est inséré entre deux faces adjacentes non recouvertes d'uranium de chaque paire d'électrodes positives ou négatives pour provoquer un ralentissement des neutrons rapides issus du réacteur. Il en résulte une amélioration de la détection à faible niveau de débit de fluence neutronique ayant une forte composante rapide.

D'autres avantages et caractéristiques ressortiront plus clairement de la description qui va suivre d'un mode de réalisation de l'invention, donné à titre d'exemple non limitatif, et représenté aux dessins annexés, dans lesquels:

– la figure 1 montre le schéma de principe du détecteur selon l'invention;
– la figure 2 est une coupe transversale à échelle agrandie du dispositif de détection;
– la figure 3 est un schéma d'une installation de détection de neutrons selon l'invention
– la figure 4 est un graphique montrant les niveaux de débit de fluence d'un réacteur nucléaire et les plages d'utilisation des différents détecteurs contenus dans l'assemblage.

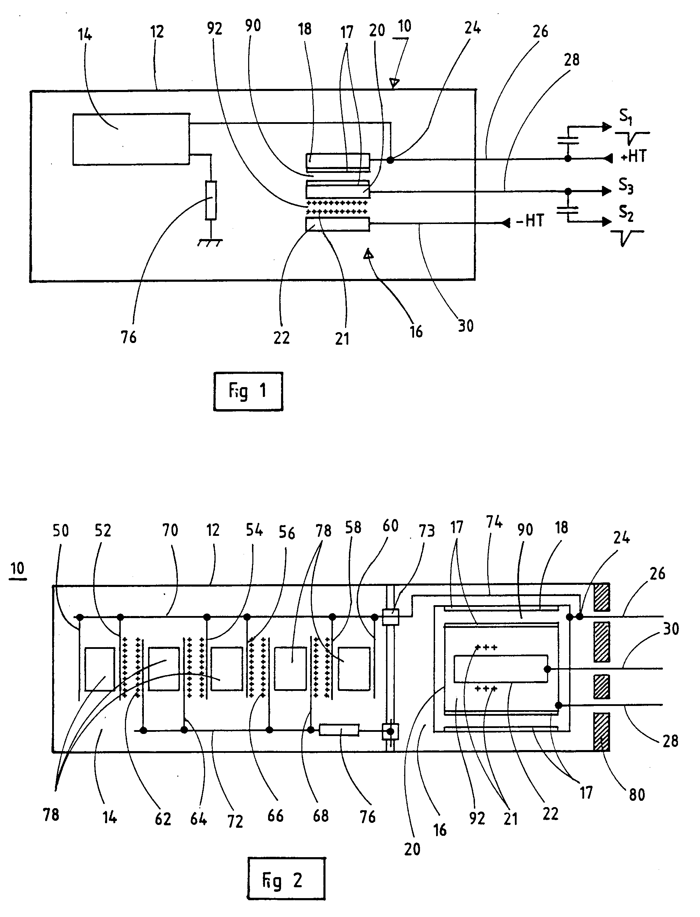

Sur la figure 1, le dispositif neutronique 10 se compose d'une enveloppe 12 métallique scellée de façon hermétique, à l'intérieur de laquelle sont montés de manière indépendante deux détecteurs 14,16 élémentaires, agencés pour obtenir une grande dynamique de mesure pour le contrôle commande des réacteurs nucléaires.

Le premier détecteur 14 est formé par une chambre d'ionisation de type à fission, avec dépôt d'uranium, ayant une grande sensibilité, et fonctionnant uniquement en impulsions.

Le deuxième détecteur 16 est constitué par une chambre d'ionisation compensée, ayant deux électrodes de polarisation 18,22 et une électrode de mesure 20. Un premier dépôt 17 de bore est agencé sur les électrodes 18,20 de la partie positive de la chambre, et un deuxième dépôt 21 d'uranium recouvre au moins une des électrodes 20,22 de la partie négative.

L'alimentation des deux détecteurs 14,16 s'effectue avec la même source de tension positive (+HT). Les deux électrodes positives des détecteurs 14,16 sont connectées à un point de raccordement 24 commun à un premier câble 26 de polarisation positive. Le signal de sortie S1 du dispositif 10 est issu des impulsions transmises par le premier détecteur 14 à travers le premier câble 26.

L'électrode centrale 20 du deuxième détecteur 16 est reliée à un deuxième câble 28 dans lequel circule un signal à deux composantes engendrant:

– un signal de sortie S2 représentant les impulsions produites par le dépôt d'uranium 21 placé dans la partie négative de la chambre,
– un signal de sortie S3 représentant le courant de la chambre d'ionisation à dépôt de bore 17 compensée au rayonnement gamma.

L'électrode 22 du deuxième détecteur 16 est branchée par un troisième câble 30 à une source de tension négative (-HT).

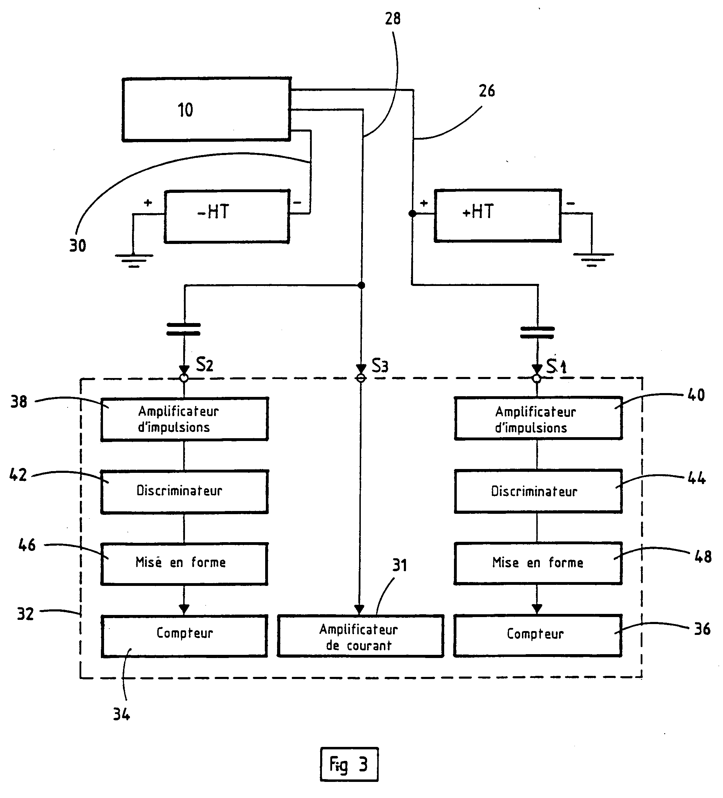

Les trois signaux S1,S2,S3 de sortie du dispositif de détection neutronique 10 sont injectés dans un circuit électronique 32 (figure 3), lequel comporte une partie impulsionnelle pour mesurer le taux de comptage, et une partie en courant pour mesurer le courant délivré lorsque le taux de comptage devient trop important.

Le signal S3 est appliqué à un amplificateur de courant 31, tandis que les impulsions de chaque signal S2 et S1 sont comptabilisées par un compteur 34,36 après passage dans un amplificateur d'impulsions 38,40, un discriminateur 42,44 et un circuit de mise en forme 46,48.

Sur la figure 2, la chambre d'ionisation de type à fission du premier détecteur 14 comporte une succession de paires d'électrodes positives 50,52; 54,56; 58,60, imbriquées entre des paires d'électrodes négatives 62,64; 66,68, et connectées respectivement à des tiges supports 70,72 à potentiel positif et négatif.

Les tiges supports 70 à potentiel positif sont fixées sur une embase 73 isolante intermédiaire et sont reliées électriquement par un conducteur 74 au point de raccordement 24, de manière à être en liaison avec la source de tension positive (+HT). Les tiges supports 72 à potentiel négatif sont également portées par l'embase 73 et reliées à l'enveloppe 12 métallique par l'intermédiaire d'une résistance 76. L'enveloppe 12 métallique sert de référence de tension en constituant la masse.

La résistance 76 est destinée à limiter le courant débité sur l'alimentation positive commune aux deux détecteurs 14,16 lorsque le dispositif 10 est soumis à des niveaux de débits de fluence élevés.

Chaque électrode positive ou négative du premier détecteur 14 se présente sous la forme d'un disque métallique revêtu sur une seule face d'un dépôt d'uranium 235 dont l'épaisseur ne dépasse pas le parcours des produits de fission dans l'uranium. Le dépôt d'uranium est représenté par des croix sur la figure 2. Cette disposition est destinée à avoir le maximum d'uranium par unité de surface et avoir ainsi une bonne sensibilité en impulsion. Entre les deux faces, non recouvertes d'uranium, d'une paire d'électrodes positives ou négatives, on dispose un modérateur 78 réalisé en un matériau hydrogéné destiné à ralentir les neutrons. Les paires d'électrodes positives et négatives sont disposées de manière parallèle et en alternance sur leurs tiges supports 70,72 de façon à définir un espace de gaz entre chacun d'entre eux. Les surfaces des électrodes en contact avec le gaz de l'espace sont revêtus d'uranium et définissent ainsi des chambres d'ionisation de type à fission. Les signaux utiles délivrés par le premier détecteur 14 sont des impulsions qui sont récupérées sur le câble 26 de polarisation positive.

Le deuxième détecteur 16 est une chambre d'ionisation à dépôt de bore compensée au rayonnement gamma. Au lieu d'utiliser des électrodes à structures planes, la chambre comporte trois électrodes 18,20,22 coaxiales et concentriques fixées sur une embase 80 isolante avec des anneaux de garde. L'électrode extérieure 18 est polarisée positivement par la source (+HT) à travers le premier câble 26, l'électrode centrale 20 sert à recueillir les signaux, et l'électrode interne 22 est polarisée négativement par le troisième câble 30 pour compenser la contribution des gammas. Les électrodes de la première chambre élémentaire 90 définie entre l'électrode externe 18 et l'électrode centrale 20 sont recouvertes par le premier dépôt de bore 17.

Les électrodes de la deuxième chambre élémentaire 92 définie entre l'électrode centrale 20 et l'électrode interne 22 n'ont pas de dépôt de bore mais l'électrode interne 22 est revêtue par le deuxième dépôt 21 d'uranium pour constituer une petite chambre à fission. Les signaux délivrés par l'électrode de mesure 20, comportent des impulsions et un courant.

Le dispositif de détection neutronique 10 est conçu pour couvrir toute la dynamique de mesure grâce à la présence des premier et deuxième détecteurs 14,16, et des trois câbles de liaison 26,28,30.

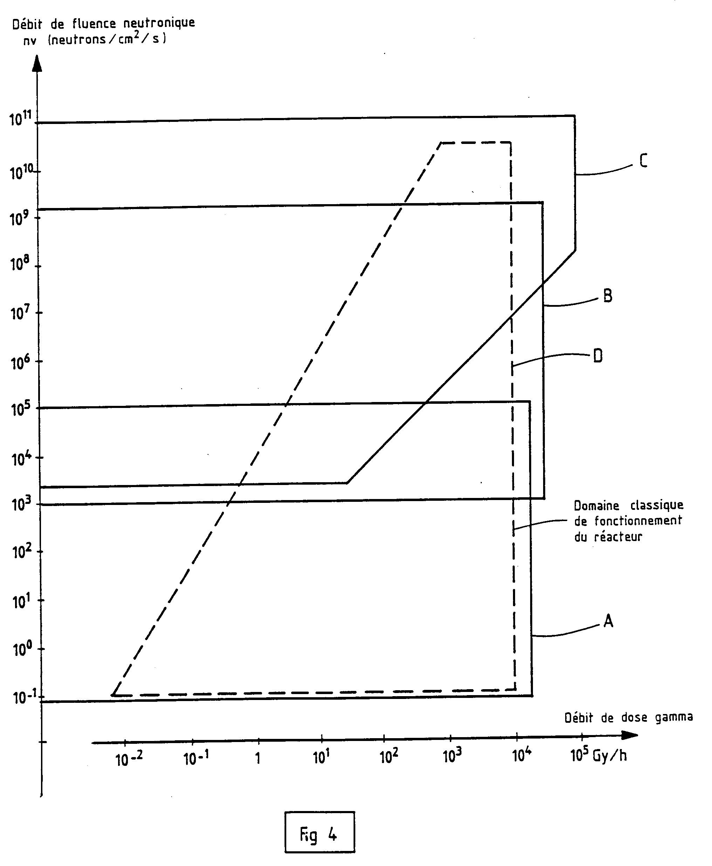

Sur la figure 4, la variation de débit de fluence (en ordonnées) est comprise entre 0,1 à $10^{11}$ neutrons par centimètre carré et par seconde (nv), alors que la variation de débit de dose gamma (en abscisses) s'étend entre 0,01 à $10^5$ Gray/heure (Gy/h).

Le fonctionnement de l'ensemble couvre près de 11 décades, et est caractérisé par trois plages d'utilisation des différentes chambres contenues dans le boîtier 12:

– une première plage A de bas niveaux s'étendant entre 0,1 à $10^5$ nv, et faisant intervenir le signal de sortie S1 issu de la chambre à fission à grande sensibilité du premier détecteur 14,

– une deuxième plage B correspondant à un niveau intermédiaire allant de $10^3$ à $10^9$ nv, dans lequel intervient le signal de sortie S2, représentant les impulsions délivrées par la chambre à fission de faible sensibilité du deuxième détecteur 16;

– et la troisième plage C correspondant à un haut niveau allant jusqu'à $10^{11}$ nv et $10^5$ Gy/h, dans lequel on utilise le signal S3 courant de la chambre à dépôt de bore du deuxième détecteur 16;

On remarque que le domaine D de fonctionnement du réacteur nucléaire dans des conditions exceptionnelles (représenté en traits discontinus sur le figure 4) est bien couvert par les plages A,B,C du dispositif de détection neutronique 10.

## Revendications

1. Dispositif de détection neutronique destiné à mesurer le débit de fluence neutronique à l'extérieur du coeur d'un réacteur nucléaire, ledit dispositif (10) étant logé dans une enveloppe (12) étanche renfermant un premier détecteur (14) formé par une chambre d'ionisation de type à fission avec dépôt d'uranium, ayant une électrode positive polarisée par une source de tension positive (+HT) au moyen d'un premier câble (26), et délivrant un signal de sortie S1 à impulsions, appliqué à l'extérieur de l'enveloppe (12) à un circuit électronique (32) de mesure,

   caractérisé en ce qu'un deuxième détecteur (16) est placé dans l'enveloppe (12), et comprend une chambre différentielle d'ionisation compensée au rayonnement gamma, ayant deux électrodes de polarisation (18,22) et une électrode de mesure (20), délimitant une première et une deuxième chambres (90,92) élémentaires adjacentes de polarités positive et négative, les électrodes (18,20) de la partie positive de la première chambre élémentaire (90) étant dotées d'un premier dépôt de bore (17), tandis qu'au moins une des électrodes (20,22) de la partie négative de la deuxième chambre élémentaire (92) comporte un deuxième dépôt d'uranium (21) de manière à former une chambre à fission ayant une sensibilité inférieure à celle du premier détecteur (14), et que l'électrode de mesure (20) est raccordée à un deuxième câble (28) utilisé pour transmettre un signal de sortie (S2) impulsionnel issu de la deuxième chambre élémentaire (92), et/ou un signal de sortie (S3) en courant issu de la première chambre élémentaire (90).

2. Dispositif de détection neutronique selon la revendication 1, caractérisé en ce que l'électrode de polarisation (18) positive du deuxième détecteur (16) est raccordée à la source de tension positive (+HT) par le premier câble (26) telle que la première chambre élémentaire (90) à dépôt de bore (17) du deuxième détecteur (16) et la chambre à ionisation de forte sensibilité du premier détecteur (14) utilisent la même alimentation de polarisation positive, et que l'autre électrode de polarisation (22) négative est reliée à une source de tension négative (-HT) par un troisième câble (30).

3. Dispositif de détection neutronique selon la revendication 1 ou 2, caractérisé en ce qu'une résistance (76) est connectée à l'électrode négative de la chambre d'ionisation du premier détecteur (14) pour limiter le courant débité sur la source de tension positive (+HT) en cas de haut niveau de débit de fluence neutronique.

4. Dispositif de détection neutronique selon la revendication 3, caractérisé en ce que l'extrémité opposée de la résistance (76) est reliée à l'enveloppe (12) métallique, laquelle sert de référence de tension en constituant la masse.

5. Dispositif de détection neutronique selon l'une des revendications 1 à 4, caractérisé en ce que la chambre d'ionisation du premier détecteur (14) comporte une succession de paires d'électrodes positives (50,52; 54,56; 58,60) imbriquées entre des paires d'électrodes négatives (62,64; 66,68), chaque électrode positive ou négative étant conformée en disque métallique revêtu sur l'une des faces d'un dépôt d'uranium, et qu'un élément modérateur (78) est inséré entre deux faces adjacentes non recouvertes d'uranium de chaque paire d'électrodes positives ou négatives pour provoquer un ralentissement des neutrons rapides.

6. Dispositif de détection neutronique selon la revendication 5, caractérisé en ce que les différentes paires d'électrodes positives (50,52; 54,56; 58,60) et négatives (62,64; 66,68) sont connectées respectivement à des tiges supports (70,72) à potentiel positif et négatif, lesdites tiges étant fixées sur une embase (73) isolante, et en liaison électrique respectivement avec le premier câble (26) et la résistance (76).

7. Dispositif de détection neutronique selon l'une des revendications 1 à 6, caractérisé en ce que les deux électrodes de polarisation (18,22) et la troisième électrode de mesure (20) du deuxième détecteur (16) sont coaxiales et concentriques, et que la troisième électrode de mesure (20) est disposée entre les deux électrodes de polarisation (18,22) externe et interne se trouvant respectivement à un potentiel positif et un potentiel négatif.

8. Dispositif de détection neutronique selon l'une des revendications 1 à 7, caractérisé en ce que le signal de sortie (S3) en courant est traité à un amplificateur de courant (31), et que chaque signal de sortie (S1,S2) impulsionnel est traité dans un compteur (34,36) après passage dans un discriminateur (42,44) et un circuit de mise en forme (46,48).

Fig 1

Fig 2

Fig 3

Fig 4